# EUROPÄISCHE PATENTANMELDUNG

(11) **EP 2 787 281 A2**
(43) Veröffentlichungstag der Anmeldung: **08.10.2014**
(21) Anmeldenummer: 14158091.0
(22) Anmeldetag: 06.03.2014
(51) Int. Cl.: F23K 3/00

(54) **Vorrats- und Transporteinrichtung**

(30) Priorität: 05.04.2013 DE 102013206085
(71) Anmelder: Robert Bosch GmbH, 70442 Stuttgart (DE)
(72) Erfinder: Jockel, Joerg, 70839 Gerlingen (DE); Hesse, Daniel, 60316 Frankfurt Am Main (DE); Wu, Datong, 75181 Pforzheim (DE); Ferreira Goncalves, Paulo Jorge, 60320 Frankfurt Am Main (DE)

(57) **Zusammenfassung**

Die Erfindung betrifft eine Vorrats- und Fördereinrichtung 10 für Pellets oder ähnlich kleinstückiges Brennmaterial zur Verbesserung von Abgaswerten ei-ner Heizungsanlage. Dabei weist einer der Vorratseinrichtung 10 zugeordneter Trog 12 eine geregelte Wiegevorrichtung zu Bestimmung einer tatsächlich entnommenen Menge von Brennmaterial auf. Eine der Fördereinrichtung 10 zugeordnete Fördervorrichtung 11 ist ein Vibrationsförderer, der eine V-förmige Förderrinne 15 aufweist, die mittels durch eine Stufe 20 zweigeteilt ausgeführt ist.

## Beschreibung

Die Erfindung betrifft eine Vorrats- und Transporteinrichtung für Pellets oder ähnliches kleinstückiges Brennmaterial nach dem Oberbegriff des unabhängigen An-spruchs 1. Bei Biomasseheizungsanlagen wird zur Förderung des Brennmaterials in den Brennraum zumeist eine Schneckenfördereinrichtung verwendet, wobei das Brennmaterial Holzpellets, Hackschnitzel oder dergleichen kleinstückiges holzartiges Gut sind. Förderschnecken weisen jedoch den Nachteil auf, dass mit ihnen nur eine unzureichende Dosierung des Brennmaterials möglich ist, da die Förderung im Wesentlich diskontinuierlich abläuft. Demgegenüber kann mit Vibrationsförderern eine kontinuierliche Förderung erreicht werden, womit die Dosierung verbessert werden kann. Im Hinblick auf die Heizleistung der Heizungsanlage und die daraus resultierenden Emissionen sind aber auch mit den bislang bekannten Fördersystemen nur unzureichende Werte erzielbar. Durch eine Betriebsweise von Biomasseheizungsanlagen mit kurzfristigen Lastspitzen kommt es zu einer diskontinuierlichen Verbrennung von Heizmaterial, wodurch hohe Emissionswerte entstehend, die zu vermeiden sind. Es ist deshalb eine Aufgabe der vorliegenden Erfindung, eine weitere Verminderung der Abgaswerte zu erreichen und deshalb die eingangs genannte Vorrats- und Transporteinrichtung weiter zu verbessern. Eine Vorrichtung zur Lösung der erfinderischen Aufgabe weist die Merkmale des unabhängigen Anspruchs 1 auf. Danach wird eine Vorrats- und Transporteinrichtung für Pellets oder ähnliches kleinstückiges Brennmaterial vorgeschlagen mit einer als Vibrationsförderer ausgebildeten Fördervorrichtung zum kontinuierlichen Transport des Brennmaterials, wobei in einem Aufgabebereich der Fördervorrichtung ein Vorratsbehälter zur teilweisen Speicherung des Brennmaterials vorgesehen ist und wobei die Fördervorrichtung eine V-förmige Förderschiene aufweist in der eine Stufe vorgesehen ist. Durch die Kombination einer Vibrationsfördervorrichtung und einer auf das Brennmaterial abgestimmten Geometrie der Förderschiene, kann nicht nur eine kontinuierliche, sondern auch eine fein dosierbare Förderung erreicht werden. Durch die V-förmige Förderschiene ist eine Vereinzelung des Brennmaterials möglich, womit in vorteilhafterweise eine Regelung bzw. Modulation der Heizleistung der Heizungsanlage möglich gemacht wird. Insbesondere ist mit der Erfindung ein be-ständiger Betrieb der Heizungsanlage auf einem niedrigen Heizleistungsniveau möglich.

Nach einer bevorzugten Ausführungsform kann es vorgesehen sein, dass die Stufe die Förderschiene in zwei Abschnitte unterteilt, wobei ein vorderer Aufgabeabschnitt und einer hinterer Übergabeabschnitt in zwei unterschiedlichen Ebenen angeordnet sind und die Stufe einem schräggerichtetem Bereich der Förderschiene entspricht. Es wurde entdeckt, dass die Stufe sich vorteilhaft auf die Vereinzelung des Brennmaterials auswirkt, womit ein Brennraum mit einer genau dosierbaren, insbesondere geringen, Menge Brennmaterials versorgbar ist. Gemäß einer Weiterbildung der Erfindung kann, eine Länge der Stufe wenigstens einer durchschnittlichen Länge eines Pellets oder ähnlich kleinstückigen Brennmaterials entsprechen. Dadurch ist gewährleistet, dass die Pellets bzw. das Brennmaterial nur einzeln von der vorderen Teilschiene auf die hintere Teilschiene gefördert werden. Es kann weiterhin bevorzugt vorgesehen sein, dass der vordere Teilschienenab-schnitt länger als der hintere Teilschienenabschnitt ist und wobei vorzugsweise während des Betriebs der Fördervorrichtung eine Schwingungsamplitude über eine Längserstreckung der Förderschiene von dem Aufgabeabschnitt zu dem Übergabeabschnitt zunimmt. Durch die Zunahme der Schwingungsamplitude wird die Vereinzelung des Brennmaterials verbessert, da das einzelne Pellet beschleunigt wird. Durch die unterschiedliche Länge der Teilschienenabschnitte kann auch eine unterschiedliche Amplitudenstärke erreicht werden.

Gemäß einer weiteren Ausgestaltung kann die Schwingungsamplitude des hinteren Übergabeabschnitts der Förderschiene größer sein als die Schwingungsamplitude des vordereren Aufgabeabschnitts. Dadurch wird die Vereinzelung und damit Dosierung von dem Vorratsbehälter zum Übergabebereich der Brennkammer sukzessive verbessert.

Nach einer bevorzugten Weiterbildung kann eine der Fördervorrichtung zugeordnete Schwingeinrichtung im Bereich des vorderen Teilschienenabschnitts, insbesondere unterhalb des Vorratsbehälters, angeordnet sein. Durch die Positionierung der Schwingeinrichtung im Bereich des Vorratsbehälters kann eine optimale Schwingungsverteilung innerhalb der Fördervorrichtung gewährleistet werden.

Für ein optimales Ergebnis kann es vorgesehen sein, dass die Fördervorrichtung zusammen mit der Schwingeinrichtung derart ausgelegt ist, dass eine Erregerfrequenz der Schwingeinrichtung sich mit einer n-fachen Eigenfrequenz der Fördervorrichtung überlagert. Durch Ausnutzung der Eigenfrequenzen der Fördervorrichtung kann ein optimales Schwingverhalten der Fördervorrichtung erreicht werden. Vor allem kann mit der Anregung der zweiten, dritten, vierten oder n-fachen Eigenfrequenz eine Amplitudenverstärkung erzielt werden. Nach einer besonders bevorzugten Ausgestaltung der Erfindung kann vorgesehen sein, dass im Bereich des Vorratsbehälters Gewichtssensoren angeordnet sind und vorzugsweise während der kontinuierlichen Förderung des Brennmaterials ein Ge-wicht eines Vorrats an Brennmaterial in dem Vorratsbehälter ermittelbar ist. Durch die Gewichtssensoren lässt sich das Gewicht des bevorratenden Materials genau messen, womit nicht nur das aktuelle Gewicht dokumentiert werden kann, sondern auch im Umkehrschluss die Menge des entnommenen Materials, welches über die Transporteinrichtung in den Brennkessel der Heizungsanlage gefördert wird.

Gemäß einer bevorzugten Weiterbildung können in Abhängigkeit einer aus dem Vorratsbehälter tatsächlich entnommenen Masse an Brennmaterial die jeweiligen Schwingungsamplituden der Teilschienenabschnitte einstellbar sein. Durch die Regelung der zu fördernden Masse mittels Überwachung der Entnahme kann die Menge an Brennmaterial, die dem Brennkessel zugeführt werden, genau festgelegt werden, wodurch die Heizleistung besser als im Stand der Technik eingestellt werden kann.

Weiterhin kann vorteilhaft vorgesehen sein, wenn ein auf der Fördervorrichtung geförderter Massestrom an Brennmaterial mit Hilfe eines Kalman-Filters ermittelbar ist, insbesondere der Massestrom aus dem Gewicht der aus dem Vorratsbehälter entnommenen Masse ermittelt wird. Im Unterschied zu einer rein differentiellen Ermittlung des Massestroms bietet ein Kalman-Filter eine rauscharme Ermittlung, was sich auf die Dosierung der Heizungsanlage und damit auch der Reduzierung der Abgaswerte positiv auswirkt. Weitere vorteilhafte Ausgestaltungen der vorliegenden Erfindung sind Inhalt der Unteransprüche.

Nachfolgend wird ein bevorzugtes Ausführungsbeispiel der Erfindung anhand der Zeichnung näher erläutert. In dieser zeigen:
- Fig. 1: eine perspektivische Darstellung eines erfindungsgemäßen Linearförderers,
- Fig. 2: eine schematische Darstellung des Linearförderers,

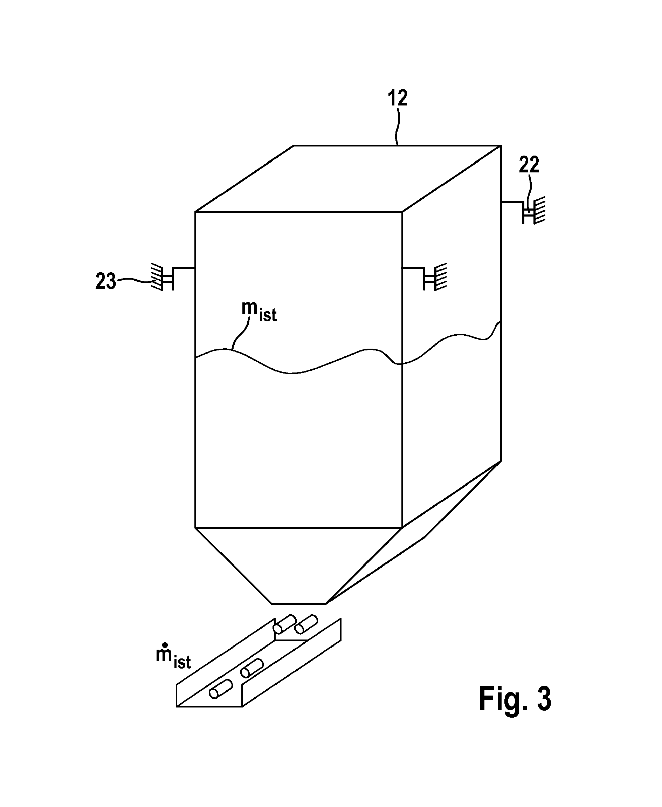

- Fig. 3: eine perspektivische Vorderansicht der Linearförderers,
- Fig. 4: ein Ablaufdiagram zur Bestimmung eines Massestrom und
- Fig. 5: eine Anordnung einer Heizungsanlage mit Linearförderer, Tagesbehälter und Heizkessel.

Linearförderer (auch Vibrationsförderer genannt) sind Förder- bzw. Transporteinrichtung, bei denen ein schwingfähig gelagertes Förderorgan mit einer Schwingeinrichtung verbunden ist, die das Förderorgan in Schwingungen versetzt. Die Schwingeinrichtung ist für gewöhnlich ein elektromagnetischer Antrieb, der bewirkt, dass das als Förderrinne, Rohr oder Trog ausgebildete Förderorgan in periodische Schwingungen versetzt wird.

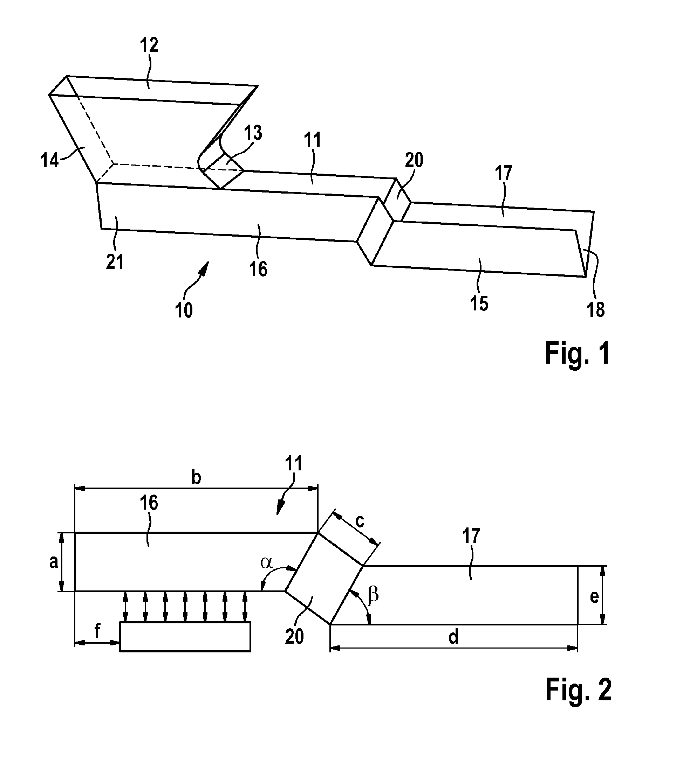

In der Fig. 1 ist eine Vorrats- und Transporteinrichtung 10 gezeigt, die eine Förder-vorrichtung 11 und einen Trog 12 aufweist. Die Vorrats- und Transporteinrichtung 10 dient der Bevorratung und dem Transport von kleinstückigen Brennmaterial, insbesondere Holzpellets. Der Trog 12 - auch Vorratsbehälter genannt - ist im Wesentlichen als ein Zwischenspeicher aufgeführt und enthält entweder eine Tagesmenge an Pellets, die eine nicht dargestellte Heizungsanlage zum Betrieb benötigt, oder der Trog 12 ist mit einem separaten Tagesmengenspeicher gekoppelt, wobei dann der Trog 12 lediglich als eine Aufgabe auf die Fördervorrichtung 11 ausgebildet ist. Der Trog 12 der Erfindung dient nicht nur der Zwischenspeicherung der Holzpellets, sondern auch als eine Aufgabestation für die Holzpellets auf die eigentlichen Fördervorrichtung 11. Durch einen an einer Vorderseite des Trogs 12 vorgesehenen Radius in einer Seitenwandung 14 und eine daran angeschlossene Auslassblende 13, erfahren die Pellets während eines Fördervorgangs eine deutliche Richtungsvorgabe. Mit dieser speziellen Ausbildung wird auch ein Verstopfen des Trogs 12 mit seiner trichterförmig ausgebildeten Seitenwandung 14 vermieden, so dass ein stetiger Förderstrom ermöglicht wird.

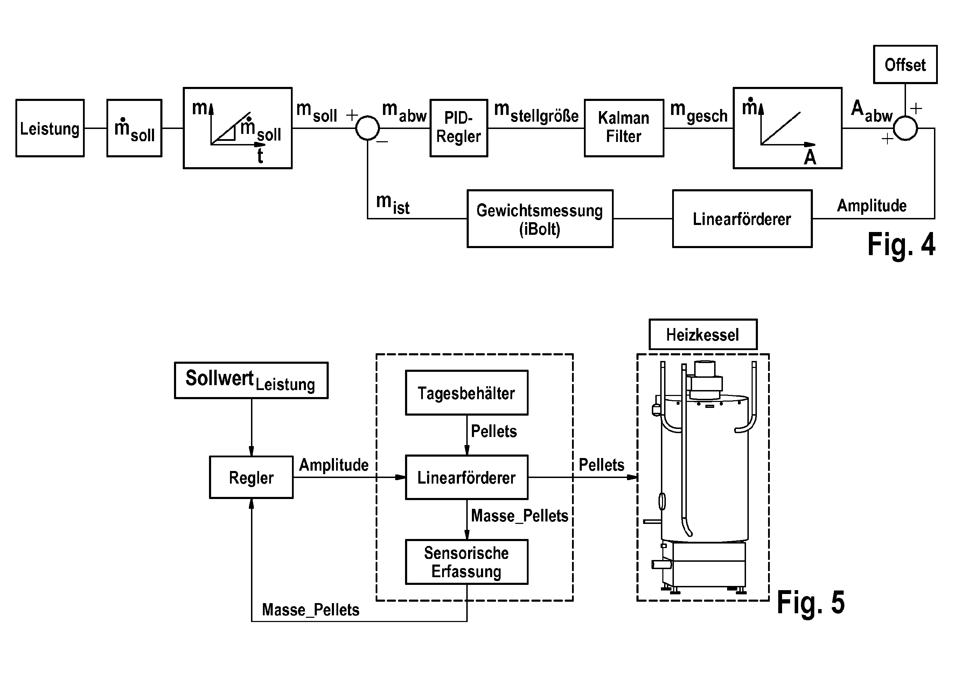

Die Fördervorrichtung 11 besteht im Wesentlich aus einem Vibrationsförderer auf dessen Oberseite eine Förderrinne 15 angeordnet ist, die V-förmig ausgebildet ist. Die Fördervorrichtung 11 ist zweiteilig ausgebildet mit einem vorderen Aufgabeab-schnitt 16 und einem hinteren Übergabeabschnitt 17. Der vordere Aufgabeabschnitt 16 bezieht sich auf einen Bereich der Förderrinne 15, in dem das Brennmaterial auf die Fördervorrichtung 11 aufgegeben wird, weshalb auch in diesem Abschnitt der Trog 12 angeordnet ist. Die Förderrinne 15 ist derart unterhalb des Trogs 12 ange-ordnet, dass das Brennmaterial direkt in die Förderrinne 15 gelangen kann. Der hin-tere Übergabeabschnitt 17 bezieht sich auf einen Bereich der Fördervorrichtung 11, der benachbart zu einem Heizkessel 18 (Fig. 5) angeordnet ist und in den das Brennmaterial übergeben wird. Insbesondere ragt ein Ende 19 in eine Übergabevorrichtung des Heizkessels 18. Durch die Vibration des Linearförderers 11 wird im vorliegenden Ausführungsbeispiel das Brennmaterial aus einem Aufgabebereich von dem Trog 12 in die Förderrinne 15 in Richtung des Endes 19 des Übergabeabschnitts 17 gefördert. Dabei werden durch die V-förmige Förderrinne 15 und die Vibrationen die einzelnen Pellets vereinzelt, wodurch diese vorzugsweise hintereinander angeordnet das Ende 19 erreichen und nicht als ein Haufen aus mehreren übereinander und nebeneinander angeordneten Pellets. Die Vereinzelung der Holzpellets wird zudem durch den speziellen Aufbau der För-dervorrichtung 11 begünstigt. Die beiden Abschnitte 16 und 17 der Fördervorrichtung 11 sind auf zwei unterschiedlichen Ebenen angeordnet und durch eine Stufe bzw. einen Absatz 20 getrennt. Dabei ist der hintere Übergabeabschnitt 17 (hintere Teilschienenabschnitt) vertikal unterhalb des vorderen Aufgabeabschnitts 16 (vordere Teilschienenabschnitt) angeordnet, so dass das Brennmaterial während des Transports entlang der Förderrinne 15 von dem Aufgabeabschnitt 16 auf den Übergabeabschnitt 17 herabfällt. Dieser Absatz 20 weist wenigstens eine Länge c auf, die einer durchschnittlichen Länge eines Pellets bzw. Brennmaterialstücks entspricht. Der Absatz 20 verbessert die Vereinzelung des Brennmaterials gegenüber einer Fördervorrichtung 11, die nur in einer Ebene angeordnet ist, insbesondere dann, wenn der Absatz 20 eine Neigung von 60° aufweist. Andere Winkel sind auch möglich, wobei dann darauf zu achten ist, dass der Absatz 20 steil genug ist, die Pellets einzeln den Absatz 20 runter gleiten zu lassen. Weiterhin hat sich gezeigt, dass für den kontinuierlichen Transport und die Vereinzelung der Pellets der Wert einer Schwingungsamplitude der Fördervorrichtung 11 wichtig ist. Dabei kann eine Steuerung eines Massenstroms des Brennmaterials über die Dosierung einer Amplitudenstärke der Fördervorrichtung 11 erfolgen. Bei einer kleinen Amplitude vermindert sich der Massenstrom, wohingegen sich bei einer hohen Amplitude einer Förderleistung erhöht.

Damit eine optimale Dosierung des Massenstroms des Brennmaterials in den Heiz-kessel 18 gewährleistet ist, ist der vordere Teilschienenabschnitt 16 länger als der hintere Teilschienenabschnitt 17 ausgebildet, wodurch die Amplitude im hinteren Teilschienenabschnitt 17 sich erhöht, wenn lediglich eine Schwingeinrichtung in der Fördervorrichtung 11 vorgesehen ist. Diese ist im Bereich des vorderen Teilschienenabschnitts 16 angeordnet und zwar im Wesentlich auf einer dem Trog 12 abgewandten Seite der Förderrinne 15 im Bereich des Aufgabebereichs vom Trog 12 auf die Förderrinne 15. Es hat sich gezeigt, dass bei einer jeweiligen Länge b des vorderen Teilschienenabschnitts 16 und Länge d des hinteren Teilschienenabschnitts 17 ein Wert von b/d = 1,27 ein optimales Schwingverhalten der Teilschienenabschnitte 16 und 17 ergibt. Das bedeutet, dass bei einem solchen Wert der hintere Teilschienenabschnitt 17 ein deutlich größeres Schwingverhalten aufweist, als der vordere Teilschienenabschnitt 16.

Die Positionierung der Schwingeinrichtung liegt beispielsweise ungefähr 10 mm von einem freien Ende 21 des vorderen Teilschienenabschnitts 16 entfernt, wobei grundsätzlich darauf zu achten ist, dass eine Eigenfrequenz der Fördereinrichtung 10 an ein erforderliches Schwingverhalten der Fördervorrichtung 11 angepasst wird. Beispielsweise können bei einer alternativen Positionierung der Schwingeinrichtung Gewichte verwendet werden, um die Eigenfrequenz anzupassen. Auch ist die Eigenfrequenz generell abhängig von der Dimensionierung der Fördervorrichtung 10, weshalb die Schwingeinrichtung auch mit größerem oder kleinerem Abstand zu dem freien Ende 21 angeordnet werden kann. Für ein optimales Schwingverhalten der Fördervorrichtung 10 kann die Schwingeinrichtung derart der Fördervorrichtung 10 zugeordnet sein, dass sich eine Erregerfrequenz der Schwingeinrichtung mit einer zweiten, dritten, vierten oder n-fachen Eigenfrequenz des Systems überlagert. Dabei kann als System als die Vorrats- und Transporteinrichtung 10 im Allgemeinen oder als die Fördervorrichtung 11 mit der Förderrinne 15 im Speziellen angesehen werden. Damit die Überlagerung der Erregerfrequenz mit der Eigenfrequenz erreicht wird, kann die Fördervorrichtung 11 zusätzlich mit Gewichten ausgerüstet sein. Um zu gewährleisten, dass auf der Fördervorrichtung 11 eine ausreichende Menge Brennmaterial transportiert wird, kann einerseits der Trog 12 mit einer Wiegevorrich-tung versehen sein. Alternativ kann auch ein dem Trog 12 vorgeschalteter Speicher eine solche Wiegevorrichtung aufweisen, wenn der Trog nur als Aufgabevorrichtung dient. Besonders bevorzugt ist die Wiegevorrichtung derart ausgebildet, dass Gewichtssensoren 22 im Bereich einer Aufhängung 23 des Trogs 12 angeordnet sind. Mit den in Aufhängungsbolzen integrierten Sensoren 22 lassen sich die Kräfte messen, die auf die Aufhängung wirken, wobei eine dazugehörige Auswerteeinrichtung aus den ermittelten Daten das Gesamtgewicht des Trogs 12 mit dem Brennmaterial ermitteln kann. Dabei wird eine Wegmessung beweglicher Bauteile innerhalb des Bolzens mittels eines Hall-Sensors gemessen. Mit der Wiegevorrichtung am Trog 12 ist zu jeder Zeit einer Förderleistungsbestim-mung möglich, die sich vorteilhaft auf eine Leistungsmodulation der Heizungsanlage auswirken kann. Insbesondere kann mit dem System aus genauer Bestimmung der Füllmenge in dem Trog 12 und der konstanten Förderung mit einer Vereinzelung des Brennmaterials eine Verbesserung der Abgaswerte der Heizungsanlage erzielt werden. Mit der Wiegevorrichtung ist es möglich die tatsächlich entnommene Pelletmenge zu bestimmen und diese mit der Fördervorrichtung 11 dem Brennkessel zuzuführen. Durch die Fördervorrichtung ist es möglich vor allem das Brennmaterial in einer langsamen kontinuierlichen Förderrate vereinzelt in den Heizkessel zu fördern. Damit kann die Heizleistung einer Heizungsanlage auf einen niedrigen Wert - beispielsweise 2 kW - heruntergefahren werden, wodurch ein kontinuierlicher Betrieb der Heizungsanlage wirtschaftlich wird. Mit einem kontinuierlichen Betrieb auf gerin-gem Leistungsniveau kann ein ständiges Aus- und Anschalten der Heizungsanlage vermieden werden, da hierbei beim Hochfahren, insbesondere beim Entzünden einer Flamme, besonders schlechte Abgaswerte auftreten, die es gilt zu vermeiden.

Zur Regelung eines Sollwertes wird auf Fig. 4 und 5 verwiesen. Ein Sollwert der Heizleistung bildet einen Eingangswert für einen Regler, insbesondere PID-Regler, wobei der Heizleistungs-Sollwert auf einen Sollwert eines Massestroms umgerech-net wird, der für die Heizleistung notwendig ist. Der Regler ist mit der Vorrats- und Transporteinrichtung 10 derart verbunden, dass der Regler über die Gewichtssenso-ren 22 am Trog 12 die tatsächlich entnommene Brennmaterialmenge übermittelt be-kommt und über die Schwingvorrichtung die Amplitude auf der Fördervorrichtung 11 einstellt, damit ein entsprechender Massestrom von Pellets bzw. des Brennmaterials zum Heizkessel gefördert werden. Falls der Trog 12 eine geregelte Ausgabeöffnung aufweist, ist diese auch mit dem Regler verbunden, der die Ausgabe des Brennmaterials auf die Fördervorrichtung 11 regelt.

Insbesondere wird zur Berechnung des Massestroms ein Kalman-Filter eingesetzt, wobei eine Stellgröße des PID-Reglers eine Eingangsgröße des Filters ist. Das Filter beschreibt einen Berechnungsalgorithmus zur Schätzung der internen Zustände eines zeitdiskreten Systems mit Hilfe von Sensordaten. Dazu werden eine zeitdiskrete lineare Beschreibung eines Massestroms sowie eine ebenfalls zeitdiskrete lineare Darstellung eines Wiegemodells benötigt. Das Klaman-Filter arbeitet rekursiv, was so viel bedeutet, dass zur Berechnung jedes Zeitschrittes nur die aktuellen Messdaten der Gewichtssensoren 22 und Systemeingänge sowie Systemausgänge eines letzten Zeitschritts zur Abschätzung der Parameter erforderlich sind.

Mit dem Kalman-Filter kann ein eindeutiger Wert des Massestroms aus der durch die Gewichtssensoren 22 gemessenen Masse ermittelt werden, ohne dass dabei die Messdaten differenziert werden müssten.

## Patentansprüche

1. Vorrats- und Transporteinrichtung (10) für Pellets oder ähnliches kleinstückiges Brennmaterial mit einer als Vibrationsförderer ausgebildeten Fördervorrichtung (11) zum kontinuierlichen Transport des Brennmaterials, wobei in einem Aufgabebereich der Fördervorrichtung (11) ein Vorratsbehälter (12) zur teilweisen Speicherung des Brennmaterials vorgesehen ist, **dadurch gekennzeichnet, dass** die Fördervorrichtung (11) eine V-förmige Förderschiene (15) aufweist in der eine Stufe (20) vorgesehen ist.

2. Vorrats- und Transporteinrichtung nach Anspruch 1, dadurch gekennzeich-net, dass die Stufe (20) die Förderschiene (15) in zwei Abschnitte (16, 17) un-terteilt, wobei ein vorderer Aufgabeabschnitt (16) und einer hinterer Übergabeabschnitt (17) in zwei unterschiedlichen Ebenen angeordnet sind und die Stufe (20) einem schräggerichtetem Bereich der Förderschiene (15) entspricht.

3. Vorrats- und Transporteinrichtung nach Anspruch 1 oder 2, **dadurch gekennzeichnet, dass** eine Länge der Stufe (20) wenigstens einer durchschnittlichen Länge eines Pellets oder ähnlich kleinstückigen Brennmaterials entspricht.

4. Vorrats- und Transporteinrichtung nach wenigstens einem der vorstehenden Ansprüche, **dadurch gekennzeichnet, dass** der vordere Teilschienenab-schnitt (16) länger als der hintere Teilschienenabschnitt (17) ist und wobei vorzugsweise während des Betriebs der Fördervorrichtung (11) eine Schwin-gungsamplitude über eine Längserstreckung der Förderschiene (15) von dem Aufgabeabschnitt zu dem Übergabeabschnitt zunimmt.

5. Vorrats- und Transporteinrichtung nach wenigstens einem der vorstehenden Ansprüche, **dadurch gekennzeichnet, dass** die Schwingungsamplitude des hinteren Übergabeabschnitts der Förderschiene (15) größer ist als die Schwingungsamplitude des vordereren Aufgabeabschnitts.

6. Vorrats- und Transporteinrichtung nach wenigstens einem der vorstehenden Ansprüche, **dadurch gekennzeichnet, dass** eine der Fördervorrichtung (11) zugeordnete Schwingeinrichtung im Bereich des vorderen Teilschienenab-schnitts (16), insbesondere unterhalb des Vorratsbehälters (12), angeordnet ist.

7. Vorrats- und Transporteinrichtung nach wenigstens einem der vorstehenden Ansprüche, **dadurch gekennzeichnet, dass** die Fördervorrichtung (11) zu-sammen mit der Schwingeinrichtung derart ausgelegt sind, dass eine Erregerfrequenz der Schwingeinrichtung sich mit einer n-fache Eigenfrequenz der Fördervorrichtung überlagert.

8. Vorrats- und Transporteinrichtung nach wenigstens einem der vorstehenden Ansprüche, **dadurch gekennzeichnet, dass** im Bereich des Vorratsbehälters (12) Gewichtssensoren (22) angeordnet sind und vorzugsweise während der kontinuierlichen Förderung des Brennmaterials ein Gewicht eines Vorrats an Brennmaterial in dem Vorratsbehälter (12) ermittelbar ist.

9. Vorrats- und Transporteinrichtung nach wenigstens einem der vorstehenden Ansprüche, **dadurch gekennzeichnet, dass** in Abhängigkeit einer aus dem Vorratsbehälter (12) tatsächlich entnommenen Masse an Brennmaterial die jeweiligen Schwingungsamplituden der Teilschienenabschnitte (16, 17) ein-stellbar sind.

10. Vorrats- und Transporteinrichtung nach wenigstens einem der vorstehenden Ansprüche, **dadurch gekennzeichnet, dass** ein auf der Fördervorrichtung (11) geförderter Massestrom an Brennmaterial mit Hilfe eines Kalman-Filters ermittelbar ist, insbesondere der Massestrom aus dem Gewicht der aus dem Vorratsbehälter (12) entnommenen Masse ermittelt wird.
